# FASCICULE DE BREVET EUROPEEN

(11) **EP 1 632 749 B1**
(45) Date de publication et mention de la délivrance du brevet: **18.08.2010**
(21) Numéro de dépôt: 05291842.2
(22) Date de dépôt: 07.09.2005
(51) Int. Cl.: G01C 15/00, E02D 1/00, E21D 9/00

(54) **Procédé et dispositf pour contrôler le creusement d'une excavation allongée dans un terrain**
Verfahren und Vorrichtung zum Graben einer in einem Gelände verlängerten Ausgrabung
Method and device for controlling the digging of an elongated excavation in a terrain.

(30) Priorité: 07.09.2004 FR 0409474
(43) Date de publication de la demande: 08.03.2006
(73) Titulaire: BOUYGUES TRAVAUX PUBLICS, 78280 Guyancourt (FR)
(72) Inventeur: Longchamp, Pierre, 04180 Villeneuve (FR); Moulin, Pierre, 91190 Gif sur Yvette (FR); De Broissia, Michel, 78180 Montigny le bretonneux (FR); Derycke, Jean-Noël, 78000 Versailles (FR)
(74) Mandataire: Texier, Christian

(56) Documents cités:
- EP-A- 0 275 511
- WO-A-01/34941
- US-A- 4 327 590
- PATENT ABSTRACTS OF JAPAN vol. 014, no. 329 (P-1076), 16 juillet 1990 (1990-07-16) -& JP 02 110312 A (FUJITA CORP), 23 avril 1990 (1990-04-23)
- PATENT ABSTRACTS OF JAPAN vol. 2003, no. 05, 12 mai 2003 (2003-05-12) -& JP 2003 013687 A (DAIHO CONSTR CO LTD), 15 janvier 2003 (2003-01-15)

## Description

L'invention concerne le contrôle du creusement d'une excavation allongée dans un terrain.

Par excavation allongée, on désigne une excavation qui s'étend dans le terrain comme un tunnel ou une tranchée, à la différence d'une excavation qui s'enfonce dans le terrain comme un forage vertical.

Les solutions classiques consistent à détecter les mouvements éventuels d'un terrain pendant le creusement de l'excavation en plaçant des capteurs dans des forages verticaux, par exemple sous et à proximité des immeubles, ou en montant des cibles de référence sur les immeubles et en à surveillant les déplacements éventuels de ces cibles, comme décrit par exemple dans les publications FR 2 843 797, EP 0 275 511 ou bien encore WO 01/34941.

La publication JP 02 110312 décrit une technique dans laquelle pour mesurer le déplacement d'un terrain en avant et au dessus du front d'un tunnel, on dispose un tube de guidage horizontal dans le terrain et on déplace dans le tube une pluralité d'inclinomètres montés en série et qui fournissent des signaux de mesure que l'on envoie à un micro calculateur, lequel calcule le degré de déplacement du sol en avant et au-dessus du front du tunnel.

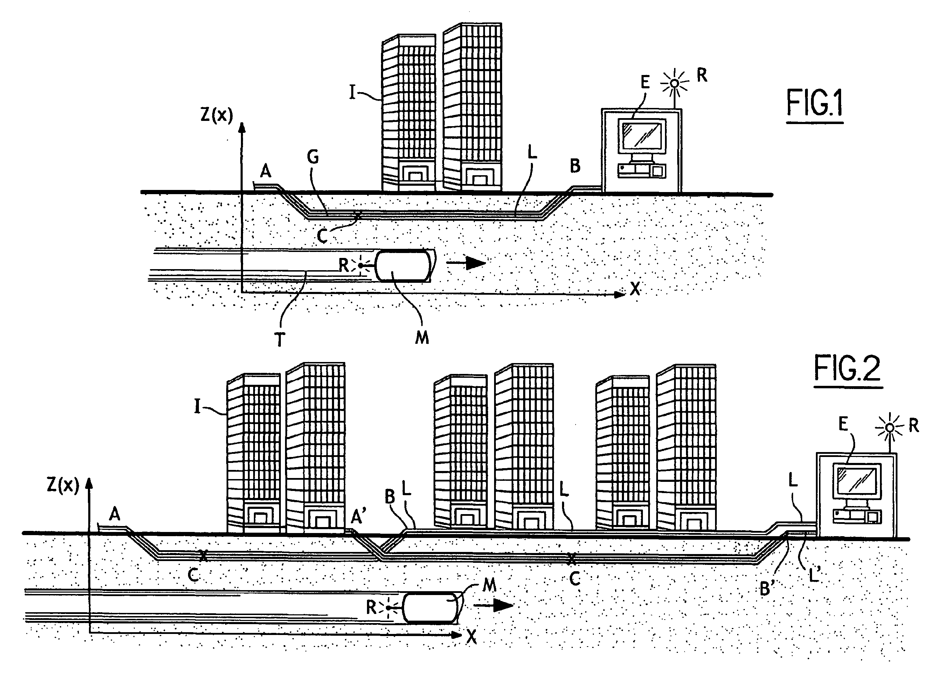

Cette technique implique que l'on réalise un forage horizontal à partir du puits de construction du tunnel, comme représenté sur la figure 1 de la publication, et n'est pas adaptée au cas le plus fréquent où le trajet du tunnel est long et sinueux.

La publication ne prévoit pas d'utiliser le résultat des mesures pour contrôler le creusement de l'excavation et d'ailleurs la simple utilisation d'inclinomètres ne serait pas suffisante à cette fin.

La publication US 4 327 590 concerne la détermination des déplacements d'un terrain au moyen d'un tube disposé dans le terrain et qui contient des butées réparties dans la longueur du tube. Un capteur déplaçable dans le tube comporte deux têtes de mesure reliées par une liaison de longueur variable et maintenues élastiquement en contact avec deux butées successives en sorte que toute modification de l'intervalle entre ces deux butées, consécutive à un déplacement du terrain, se traduise par une variation de la longueur de la liaison, laquelle engendre un signal électrique correspondant.

Cette publication ne concerne pas la réalisation d'une excavation.

La présente invention vise à contrôler le creusement de l'excavation en évitant les difficultés signalées, notamment dans le cas d'excavations de grande longueur, par exemple de plusieurs dizaines ou centaines de mètres, sur un trajet qui peut être sinueux.

On y parvient, selon l'invention, par un procédé dans lequel on prédétermine des valeurs limites de mouvement de terrain, on place des capteurs aptes à produire des signaux représentatifs des mouvements du terrain dans un ou plusieurs forages dirigés, réalisés avant le creusement, à partir de la surface du terrain, et orientés pour passer le long et à proximité du trajet de l'excavation, sur tout ou partie de ce trajet et remonter en surface, on exploite les signaux fournis par les capteurs pour les transformer en valeurs susceptibles d'être comparées aux valeurs prédéterminées, on effectue cette comparaison, et on utilise les résultats de cette comparaison pour conduire, corriger ou arrêter le creusement.

Les techniques de « forage dirigé » sont des techniques connues. Par exemple, un trou pilote est foré à l'aide d'une tête de forage munie de buses d'injection de la boue de forage envoyée sous pression, suivie d'un train de tiges introduits dans le sol par un système de vérins hydrauliques et dont la poussée (sans rotation du train de tiges) permet de modifier la trajectoire de la tête. La tête est équipée d'une sonde émettrice qui communique en permanence sa position, sa profondeur, son inclinaison et sa position horaire. Le trou pilote est ensuite agrandi à la dimension voulue par un ou plusieurs aléseurs qui remplacent successivement la tête foreuse.

Le tube ou la gaine à introduire dans le forage est mis en place par tirage.

En tant que de besoin, des moyens, par exemple des moyens intégrés aux capteurs, sont prévus pour envoyer également des signaux indiquant les positions des capteurs.

Dans des modes de réalisation préférés, ce procédé se caractérise encore par une ou plusieurs des caractéristiques suivantes :
- dans le cas d'excavations longues et/ou dont le trajet peut être plus ou moins sinueux on réalise plusieurs forages répartis de façon à couvrir les portions de trajet sensibles dans la longueur d'excavation ;
- on met en place dans le ou chaque forage une gaine en contact intime avec le terrain, pour recevoir les capteurs ;
- on scelle la gaine au terrain au moyen d'un produit de scellement ayant un module de déformation voisin de celui du terrain ;
- on dispose des capteurs à des emplacements fixes ;
- on déplace à l'aide d'un système de navette va et vient un ou des capteurs, au fur et à mesure du creusement de l'excavation ;
- on utilise des capteurs de type cellule de pression dans un liquide pour mesurer les mouvements verticaux du terrain ;
- on utilise des fibres optiques pour transmettre les signaux des capteurs à une centrale d'exploitation ;
- on incorpore les capteurs aux fibres optiques ;
- on exploite les signaux des capteurs pour visualiser les mouvements du terrain sur une représentation en long du creusement.

L'invention concerne également un dispositif pour la mise en oeuvre du procédé afin de contrôler une machine de creusement.

Ce dispositif comprend un ou plusieurs forages dirigés réalisés dans le terrain à partir de la surface du terrain, et orientés pour passer le long et à proximité des parties sensibles du trajet de creusement et remonter en surface, des capteurs placés dans ces forages et aptes à fournir des signaux représentatifs des mouvements du terrain, des moyens pour transmettre ces signaux à une centrale d'exploitation des signaux, des moyens pour transformer ces signaux en des valeurs correspondantes comparables à des valeurs limites prédéterminées, des moyens pour effectuer cette comparaison et des moyens pour informer le conducteur de la machine des résultats de cette comparaison en vue de contrôler le creusement.

Dans des modes de réalisation préférés, ce dispositif présente encore une ou plusieurs des caractéristiques suivantes :
- il comprend une ou des gaines placées dans le ou les forages et scellés au terrain pour recevoir les capteurs ;
- il comprend un ou des forages échelonnés le long du trajet de l'excavation ;
- il comprend des fibres optiques pour transmettre les signaux des capteurs à la centrale d'exploitation ;
- les capteurs sont intégrés aux fibres optiques.

Selon le cas, le forage sera situé au dessus, au dessous ou à côté de l'excavation.

Dans le cas d'une excavation pour la réalisation d'un tunnel enterré, le forage sera de préférence situé au dessus de l'excavation.

Dans le cas d'une tranchée, le forage ou la gaine sera situé sous la tranchée et/ou le long des parois de la tranchée.

Les trois figures du dessin joint sont des schémas relatifs à la mise en oeuvre de l'invention lors du creusement d'une excavation pour la réalisation d'un tunnel, notamment sous des immeubles.

Sur ces schémas, on a représenté une excavation T en cours de creusement selon une direction principale X au moyen d'un tunnelier (M) pour réaliser un tunnel qui doit passer sous des immeubles I.

Selon l'invention, pour contrôler le tunnelier, on réalise au préalable à partir de la surface du terrain un forage dirigé (ou plusieurs forages dirigés) (A-B) parallèle à une partie sensible du trajet de l'excavation projetée et situé à proximité immédiate et au dessus de l'extrados de l'excavation, que l'on dirige par une technique connue de forage directionnel pour qu'il comprenne un tronçon de forage parallèle à une partie sensible du trajet projeté et pour qu'il remonte en surface, on place dans le forage des capteurs (C), disposés à postes fixes ou déplaçables par un système de navette et reliés en permanence par une ou des liaisons (L) de transmission des signaux à une centrale (E) d'exploitation des signaux des capteurs, elle-même reliée par une transmission sans fil (R-R) à la cabine de conduite du tunnelier. Ces capteurs renseigneront en temps réel les opérateurs du tunnelier des mouvements anormaux de terrain par comparaison avec les mouvements limites prédéterminés de façon à permettre de réagir immédiatement et dès l'origine à un quelconque dysfonctionnement du tunnelier ou encore en modifiant les paramètres de forage du tunnelier et, si ces mesures sont insuffisantes, pour justifier l'arrêt et la mise en sécurité du processus.

Le forage dirigé s'étend, à partir de la surface (A) du terrain sur un trajet essentiellement parallèle à la direction théorique de l'excavation le long d'une partie estimée sensible du trajet de l'excavation, et remonte vers la surface (B) du terrain jusqu'à la centrale d'exploitation (E) .

S'il y a lieu, on place dans le forage une gaine (G) mise en contact intime avec le terrain et qui contiendra les capteurs.

Dans des réalisations préférées, on utilise une fibre optique qui comporte les capteurs et que l'on peut placer directement dans le forage, sans nécessiter une gaine.

La comparaison des signaux des capteurs et des valeurs limites préétablies des mouvements du terrain est effectuée dans la centrale d'exploitation et/ou dans le poste de pilotage de la machine de creusement. Une liaison radio est établie entre la centrale (E) et la machine de creusement schématisée en (M) pour transmettre au conducteur de la machine les signaux des capteurs ou les signaux résultant de la comparaison en sorte que le conducteur puisse agir en conséquence sur la conduite de la machine.

Les moyens de transformation des signaux des capteurs en valeurs comparables et les moyens de comparaison, ressortent de l'électronique ordinaire de traitement d'un signal.

Si le trajet de l'excavation doit être long, il est prévu d'exécuter une suite de forages pour couvrir les parties sensibles du terrain sur toute la longueur du trajet. Chaque forage part de la surface, s'enfonce dans le terrain, suit une partie du parcours et remonte en surface vers la centrale d'exploitation.

La figure 2 montre pour l'exemple le cas de deux forages dirigés (A-B) et (A' -B' ) .

Le trajet de l'excavation qui a été représenté rectiligne et horizontal sur les figures 1 et 2 sera généralement sinueux et le sectionnement des forages en forages successifs convient particulièrement au cas d'une excavation qui comprend des tronçons successifs sur un parcours général plus ou moins sinueux.

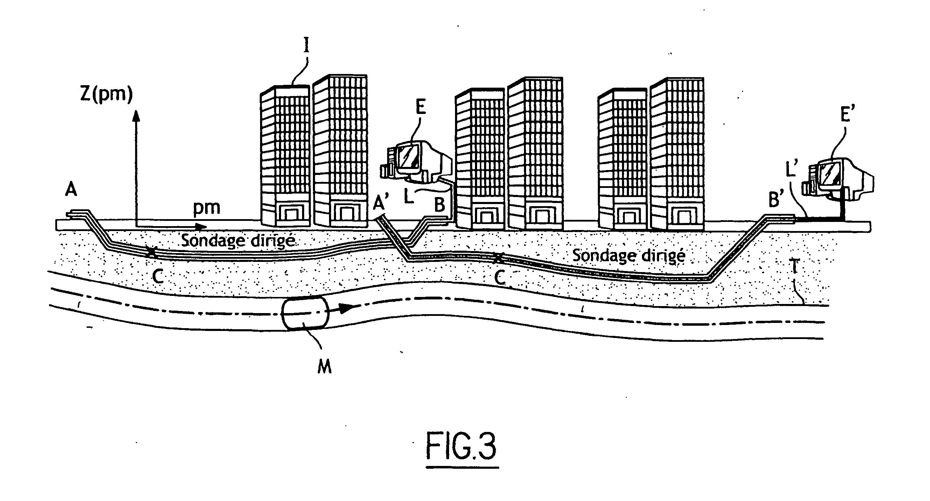

La figure 3 est un schéma où l'on a représenté un parcours sinueux et deux forages réalisés le long de ce parcours parallèlement aux sinuosités.

Comme on le voit sur cette figure, les capteurs des deux forages sont reliés à des centrales d'exploitation respectives (E, E') au lieu d'être reliés à une même centrale comme dans le cas du schéma de la figure 2. Il va de soi que selon les convenances, on utilisera une ou plusieurs centrales.

## Revendications

1. Procédé pour contrôler le creusement d'une excavation allongée dans un terrain, dans lequel on prédétermine des valeurs limites de mouvement de terrain, on place des capteurs aptes à produire des signaux représentatifs des mouvements du terrain, on exploite les signaux fournis par les capteurs pour les transformer en valeurs susceptibles d'être comparées aux valeurs prédéterminées, on effectue cette comparaison, et on utilise les résultats de cette comparaison pour conduire, corriger ou arrêter le creusement, **caractérisé en ce qu'**on place les capteurs dans un ou plusieurs forages dirigés réalisés avant le creusement, à partir de la surface du terrain, et orientés pour passer le long et à proximité du trajet de l'excavation, sur tout ou partie de ce trajet et remonter en surface.

2. Procédé selon la revendication 1 dans lequel on met en place dans le forage une gaine en contact intime avec le terrain, pour recevoir les capteurs.

3. Procédé selon la revendication 2 dans lequel on scelle la gaine au terrain au moyen d'un produit de scellement ayant un module de déformation voisin de celui du terrain.

4. Procédé selon l'une des revendications 2 et 3 dans lequel on dispose des capteurs à des emplacements fixes.

5. Procédé selon l'une des revendications 2 et 3 dans lequel on déplace les capteurs à l'aide d'un système de navette va et vient, au fur et à mesure du creusement.

6. Procédé selon l'une des revendications précédentes dans lequel on utilise des capteurs de type cellule de pression dans un liquide pour mesurer les mouvements verticaux du terrain.

7. Procédé selon l'une des revendications précédentes dans lequel on utilise des fibres optiques pour transmettre les signaux des capteurs à une centrale d'exploitation.

8. Procédé selon l'une des revendications précédentes dans lequel on exploite les signaux des capteurs pour visualiser les mouvements du terrain sur une représentation en long du trajet du creusement.

9. Dispositif pour contrôler le creusement d'une excavation allongée dans un terrain au moyen d'une machine de creusement (M), ce dispositif comprenant des capteurs (C) aptes à fournir des signaux représentatifs des mouvements du terrain et des moyens (L, L') pour transmettre ces signaux à une centrale (E) d'exploitation des signaux, et des moyens pour transformer ces signaux en valeurs comparables à des valeurs limites prédéterminées, des moyens pour effectuer cette comparaison et des moyens pour informer le conducteur de la machine de creusement des résultats de cette comparaison pour qu'il contrôle le creusement, **caractérisé en ce que** ces capteurs sont placés dans un ou plusieurs forages dirigés (A-B,A'-B') réalisés dans le terrain à partir de la surface du terrain, et orientés pour passer le long et à proximité des parties sensibles du trajet de creusement et remonter en surface.

10. Dispositif selon la revendication 9 et qui comprend des fibres optiques (L, L') pour transmettre les signaux des capteurs C à la centrale d'exploitation (E).

11. Dispositif selon la revendication 10 dans lequel les capteurs C sont intégrés aux fibres optiques L.

12. Dispositif selon l'une des revendications 9 à 11 et qui comprend des moyens pour détecter les positions des capteurs le long du forage.

13. Dispositif selon l'une des revendications 9 à 12 dont le forage est situé au dessous de l'excavation.

14. Dispositif selon l'une des revendications 9 à 12 dont le forage est situé au-dessus de l'excavation.

15. Dispositif selon l'une des revendications 9 à 12 dont le forage est situé sur un côté de l'excavation.

16. Dispositif selon l'une des revendications 9 à 15 et qui comprend plusieurs forages (A-B, A'-B') qui s'échelonnent le long du parcours prévu pour l'excavation.

17. Application d'un procédé selon l'une des revendications 1 à 8 ou d'un dispositif selon l'une des revendications 9 à 16 au contrôle du creusement d'une excavation pour la réalisation d'un tunnel enterré.

18. Application d'un procédé selon l'une des revendications 1 à 8 ou d'un dispositif selon l'une des revendications 12 à 17 au contrôle du creusement d'une tranchée.

## Claims

1. A method for controlling the digging of an elongated excavation in a piece of land, wherein limiting landslide values are predetermined, sensors capable of producing signals representative of landslides are placed, the signals provided by the sensors are utilized in order to transform them into values which may be compared with predetermined values, this comparison is performed, and the results of this comparison are used for conducting, correcting or stopping the digging, **characterized in that** the sensors are placed in one or more directed boreholes made before the digging, from the surface of the ground, and oriented so as to pass along and in proximity to the path of the excavation, over all or part of the path, and to return up to the surface.

2. The method according to claim 1, wherein in the borehole a sheath is set into place in intimate contact with the ground, in order to receive the sensors.

3. The method according to claim 2, wherein the sheath is sealed to the ground by means of a sealant product having a deformation modulus close to that of the ground.

4. The method according to any of claims 2 and 3 wherein sensors are positioned at fixed locations.

5. The method according to any of claims 2 and 3 wherein the sensors are gradually displaced by means of a to-and-fro shuttle system, as digging progresses.

6. The method according to any of the preceding claims wherein sensors of the pressure cell type are used in a liquid for measuring the vertical movements of the ground.

7. The method according to any of the preceding claims wherein optical fibers are used for transmitting the signals from the sensors to an operational processing centre.

8. The method according to any of the preceding claims wherein the signals of the sensors are utilized for viewing the movements of the ground on a representation along the path of the digging.

9. A device for controlling the digging of an elongated excavation in a piece of land by means of a digging machine (M), this device comprising sensors (C) capable of providing signals representative of the ground movements and means (L, L') for transmitting these signals to an operational centre (E) for processing the signals, and means for transforming these signals into values comparable with predetermined limiting values, means for performing this comparison and means for informing the driver of the digging machine on the results of this comparison so that he/she controls the digging, **characterized in that** these sensors are placed in one or more directed boreholes (A-B, A'-B') made in the ground from the surface of the ground and oriented in order to pass along and in proximity to sensitive portions of the digging path and to return up to the surface.

10. The device according to claim 9 and which comprises optical fibers (L, L') for transmitting the signals of the sensors C to the operational processing centre (E).

11. The device according to claim 10 wherein the sensors C are integrated into the optical fibers L.

12. The device according to any of claims 9 to 11 and which comprises means for detecting the positions of the sensors along the borehole.

13. The device according to any of claims 9 to 12, the borehole of which is located below the excavation.

14. The device according to any of claims 9 to 12, the borehole of which is located above the excavation.

15. The device according to any of claims 9 to 12, the borehole of which is located on one side of the excavation.

16. The device according to any of claims 9 to 15 and which comprises several boreholes (A-B, A'-B') which are spaced out along the intended route for the excavation.

17. An application of a method according to any of claims 1 to 8 or of a device according to any of claims 9 to 16 for controlling the digging of an excavation for making a buried tunnel.

18. An application of a method according to any of claims 1 to 8 or of a device according to any of claims 12 to 17 for controlling the digging of a trench.

## Patentansprüche

1. Verfahren zum Steuern des Vortriebs eines länglichen Aushubs in einem Boden, wobei Grenzwerte der Bodenbewegung vorherbestimmt werden, Sensoren angeordnet werden, die dazu geeignet sind, um Signale zu erzeugen, die für die Bewegungen des Bodens repräsentativ sind, die von den Sensoren gelieferten Signale ausgewertet werden, um sie in Werte umzuwandeln, die mit den vorherbestimmten Werten vergleichbar sind, dieser Vergleich ausgeführt wird und die Ergebnisse dieses Vergleichs verwendet werden, um den Vortrieb zu leiten, zu korrigieren oder anzuhalten,
**dadurch gekennzeichnet, dass** die Sensoren in einer oder mehreren Zielbohrungen angeordnet werden, die vor dem Vortrieb von der Oberfläche des Bodens aus ausgeführt werden und orientiert sind, um an der Strecke des Aushubs entlang und in ihrer Nähe über die ganze Strecke oder einen Teil davon zu verlaufen und an die Oberfläche zurückzukehren.

2. Verfahren nach Anspruch 1, wobei in der Bohrung ein Hüllrohr in engem Kontakt mit dem Boden angeordnet wird, um die Sensoren aufzunehmen.

3. Verfahren nach Anspruch 2, wobei das Hüllrohr anhand eines Vergussmittels, das ein ähnliches Verformungsmodul wie der Boden aufweist, mit dem Boden vergossen wird.

4. Verfahren nach einem der Ansprüche 2 und 3, wobei Sensoren an festen Standorten angeordnet-werden.

5. Verfahren nach einem der Ansprüche 2 und 3, wobei die Sensoren anhand eines mit dem vorschreitenden Vortrieb hin und her pendelnden Systems bewegt werden.

6. Verfahren nach einem der vorhergehenden Ansprüche, wobei Sensoren nach Art einer Druckzelle in einer Flüssigkeit verwendet werden, um die senkrechten Bewegungen des Bodens zu messen.

7. Verfahren nach einem der vorhergehenden Ansprüche, wobei Lichtleitfasern verwendet werden, um die Signale der Sensoren an eine Auswertungszentrale zu übertragen.

8. Verfahren nach einem der vorhergehenden Ansprüche, wobei die Signale der Sensoren ausgewertet werden, um die Bewegungen des Bodens auf einer Längsdarstellung der Vortriebstrecke zu visualisieren.

9. Vorrichtung zum Steuern des Vortriebs eines länglichen Aushubs in einem Boden mittels einer Vortriebsmaschine (M), wobei diese Vorrichtung Sensoren (C) umfasst, die dazu geeignet sind, Signale zu liefern, die für die Bewegungen des Bodens repräsentativ sind, und Mittel (L, L'), um diese Signal an eine Zentrale (E) zum Auswerten der Signale zu übertragen, und Mittel, um diese Signale in Werte umzuwandeln, die mit vorherbestimmten Grenzwerten vergleichbar sind, Mittel, um diesen Vergleich auszuführen, und Mittel, um den Fahrer der Vortriebsmaschine über die Ergebnisse dieses Vergleichs zu informieren, damit er den Vortrieb steuert,
**dadurch gekennzeichnet, dass** diese Sensoren in einer oder mehreren Zielbohrungen (A-B, A'-B') angeordnet werden, die in dem Boden von der Oberfläche des Bodens aus ausgeführt werden und orientiert sind, um an den kritischen Teilen der Vortriebstrecke entlang und in ihrer Nähe zu verlaufen und an die Oberfläche zurückzukehren.

10. Vorrichtung nach Anspruch 9 und umfassend Lichtleitfasern (L, L'), um die Signale der Sensoren C an die Auswertungszentrale (E) zu übertragen.

11. Vorrichtung nach Anspruch 10, wobei die Sensoren C in die Lichtleitfasern L integriert sind.

12. Vorrichtung nach einem der Ansprüche 9 bis 11 und umfassend Mittel, um die Positionen der Sensoren an der Bohrung entlang zu erfassen.

13. Vorrichtung nach einem der Ansprüche 9 bis 12, wobei die Bohrung sich unterhalb des Aushubs befindet.

14. Vorrichtung nach einem der Ansprüche 9 bis 12, wobei die Bohrung sich oberhalb des Aushubs befindet.

15. Vorrichtung nach einem der Ansprüche 9 bis 12, wobei die Bohrung sich auf einer Seite des Aushubs befindet.

16. Vorrichtung nach einem der Ansprüche 9 bis 15 und umfassend mehrere Bohrungen (A-B, A'-B'), die an dem für die Aushebung vorgesehenen Verlauf entlang gestaffelt sind.

17. Anwendung eines Verfahrens nach einem der Ansprüche 1 bis 8 oder einer Vorrichtung nach einem der Ansprüche 9 bis 16 auf die Steuerung des Vortriebs eines Aushubs für die Durchführung eines unterirdischen Tunnels.

18. Anwendung eines Verfahrens nach einem der Ansprüche 1 bis 8 oder einer Vorrichtung nach einem der Ansprüche 12 bis 17 auf die Steuerung des Vortriebs eines Grabens.
